# EUROPEAN PATENT SPECIFICATION

(11) **EP 2 328 770 B1**
(45) Date of publication and mention of the grant of the patent: **16.07.2014**
(21) Application number: 09815618.5
(22) Date of filing: 24.09.2009
(51) Int. Cl.: B60J 7/20, B60J 7/14

(54) **VEHICLE ROOF RETRACTING DEVICE AND VEHICLE HAVING THE SAME**
VORRICHTUNG ZUM EINZIEHEN EINES FAHRZEUGDACHS UND FAHRZEUG DAMIT
DISPOSITIF DE RÉTRACTION DE TOIT DE VÉHICULE ET VÉHICULE QUI EN EST MUNI

(30) Priority: 27.09.2008 CN 200820137021 U
(43) Date of publication of application: 08.06.2011
(73) Proprietor: BYD Company Limited, Shenzhen 518118 (CN)
(72) Inventor: MAO, Dehe, Guangdong 518118 (CN); MAN, Hu, Guangdong 518118 (CN); YAN, Hongfei, Guangdong 518118 (CN); QIN, Yi, Guangdong 518118 (CN); LIU, Tao, Guangdong 518118 (CN)
(74) Representative: Gulde & Partner
(86) International application number: PCT/CN2009/074199
(87) International publication number: WO 2010/034249

(56) References cited:
- WO-A2-2008/064234
- CN-A- 101 186 179
- CN-Y- 2 880 565
- CN-Y- 201 291 742
- CN-Y- 201 309 396
- DE-A1- 10 217 916
- DE-A1-102004 054 160
- US-A1- 2007 182 200
- US-A1- 2008 203 758
- US-B2- 6 293 605
- US-B2- 6 832 804

## Description

### FIELD OF THE INVENTION

The present invention relates to vehicles. More particularly, relates to roof retracting devices and vehicles fitted with said device. Document DE 10217916 discloses a device according to the preamble of claim 1.

### BACKGROUND OF THE INVENTION

Along with the development of social and economic, people pay more attention to the quality of life. Vehicles fitted with retractable hard tops enjoy an increasing popularity. Such vehicle roofs should ensure the sealing requirement in the closed position in order to solve the problem of all-weather suitability. Also, it should be safe and stable during the operation of the hard top.

Compared with vehicles fitted with triple-collapsed roofs, vehicles fitted with double-collapsed roofs are simpler in configuration, but they need longer trunks to accommodate the roofs. It is more difficult to drive a vehicle which is longer. Such vehicles should split the difference. Thus, a roof retracting device is needed to retract a long roof into a trunk as short as possible and ensure the sealed condition.

A retractable hard top is disclosed in the Chinese Patent Publication No.CN 1293122A. The retractable hard top comprises an upper roof section and a rear roof section which is connected to the upper roof section via a rod assembly. When pivoting the rear roof into the retracted position, the upper roof section can move into the interior of the rear roof section and retracts into the accommodation space together with the rear roof section. This patent do not takes into account the sealed condition when the roof is in the closed and retracted position.

A retractable hard top of vehicle is disclosed in the Chinese Patent No.CN2880565Y. Said hard top comprises a foundation, a first rod which is connected to the front of the foundation, a second rod which is connected to the rear of foundation, and a third rod which connects the first rod and the second rod. The second rod comprises a rear rod and a front rod which is connected to the rear rod. During operation, the hydraulic system actuates the roof to displace between the closed position in which the roof is resting on the frame and the retracted position in which the roof retracts into a roof accommodation space. Said patent also does not refer to a mechanism used to ensure sealed condition. Therefore, the vehicle fitted with said hard top does not meet the esthetic and aerodynamic needs.

Moreover, a retractable roof device and the vehicle fitted with said device are disclosed in the Chinese Patent Publication No.CN1750952A. The retractable roof device comprises a rear cover. Said rear cover comprises a rear shelf and two closure flaps positioned on both sides of the rear shelf. The rear cover can be opened in order to make space for the passage of the roof and the guiding means of the roof when the roof is displaced between the closed position and the retracted position. And, the rear cover can conceal a gap when the roof is in the closed position or in the detracted position. The rear cover operates together with the roof. Concretely, the extension of the guiding means of the roof causes rotation of a cam of a principal axis. Then the cam actuates the rear cover to move via a L-shaped lever. With continuous rotation of the guiding means of the roof, the extension of the guiding means comes into contact with the pulley nested on the principal axis and causes rotation of the pulley. The rotation of the pulley generates a tractive force on a cable which is fixed to the pulley. At the other end of the cable, this tractive force acts on an actuating mechanism of the closure flaps and further causes opening or closing of the closure flaps. But vehicles fitted with said retractable roof devices suffer from many disadvantages. Firstly, the malfunctions that the start point of the parts is not concurrent and the cable comes out of the preset track in ruinous aftermath such as rupture of the rear shelf and stopping of the roof during operation. Secondly, said retractable roof device which is complicated in configuration needs to be manufactured and assembled in high accuracy. Thirdly, it is difficult to adjust the relation between the trunk cover and the roof. Fourthly, the operation of said retractable roof device is not stable.

### SUMMARY OF THE INVENTION

The object of the present invention is to provide an improved roof retracting device which is simpler in structure, more reliable and stable in operation.

According to an embodiment of the present invention, a vehicle roof retracting device comprises a guiding means of the roof, a rear shelf, a trunk cover, and a principal shaft. Said guiding means of the roof rotates around said principal shaft in order to actuate the roof to displace between the closed position and the retracted position, the rear shelf can be opened to make space for the passage of the roof and closed to conceal a gap between the roof and the trunk cover. Said roof retracting device also comprises an initiative lever, which is connected to an extension configured to extend transversely from one end of said guiding means of the roof and is actuated by said extension to rotate around said principal shaft; and a connecting lever, which is connected between the initiative lever and the rear shelf to displace the rear shelf between the opened position and the closed position.

Preferably said extension of the guiding means comes into contact with said initiative lever to open said rear shelf, when the guiding means of the roof actuates the roof to displace from the closed position to the retracted position.

Preferably said extension of the guiding means comes into contact with said initiative lever to close said rear shelf during the guiding means of the roof actuates the roof to displace from the retracted position to the closed position.

Preferably said device further comprises a resetting lever selectively engaged with or disengaged from a cam of said initiative lever, which comes into contact with the cam of said initiative lever and rotates said initiative lever to close the rear shelf after the roof is retracted into the trunk.

Preferably said device further comprises a resetting spring, which is connected to said initiative lever, and causes rotation of said initiative lever to open said rear shelf when the roof does not come out of the trunk and said resetting lever is disengaged from said cam.

Preferably said resetting lever operates together with said trunk cover, said resetting lever comes into contact with said cam of said initiative lever to close said rear shelf when said trunk cover comes into the closed position, said resetting lever is disengaged from said cam to open said rear shelf via said resetting spring when said trunk cover comes into the opened position.

According to another embodiment of the invention, the present invention also provides a vehicle which comprises aforesaid roof retracting device.

In the roof retracting device according to the present invention, the rear shelf operates harmoniously with the guiding means of the roof via the extension of the guiding means, the initiative lever and the connecting lever. Also, the roof retracting device becomes simpler in structure and more reliable in operation.

### BRIEF DESCRIPTION OF THE DRAWINGS

The aforementioned features and advantages of the invention as well as additional features and advantages thereof will be more clearly understood hereinafter as a result of a detailed description of embodiments when taken in conjunction with the drawings.

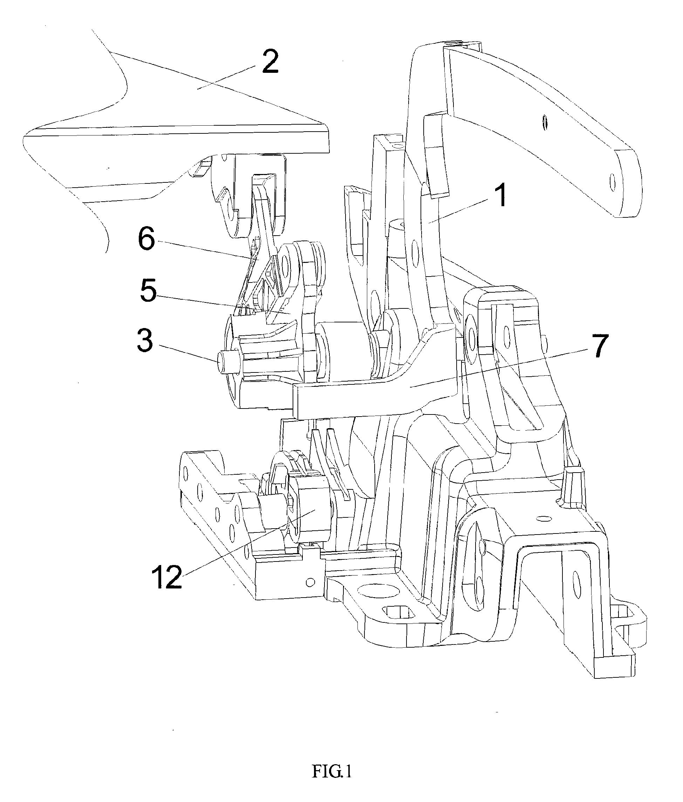

FIG. 1 is a perspective view illustrating an embodiment of the roof retracting device.

### DETAILED DESCRIPTION OF THE EMBODIMENTS

According to an embodiment of the present invention, the roof retracting device comprises a guiding means 1 of the roof, a rear shelf 2, a trunk cover, and a principal shaft 3. The guiding means 1 of the roof rotates around the principal shaft 3 in order to actuate the roof to displace between the closed position and the retracted position, the rear shelf 2 can be opened to make space for the passage of the roof and closed to conceal a gap between the roof and the trunk cover. The roof retracting device also comprises an initiative lever 5 and a connecting lever 6. An extension 7 is configured to transversely extend from one end of the guiding means 1 of the roof, and is connected to the initiative lever 5 and actuates the initiative lever 5 to rotate around the principal shaft 3. The connecting lever 6 is connected between the initiative lever 5 and said rear shelf 2 to cause the displacement of the rear shelf 2 between the opened position and the closed position.

The guiding means 1 of the roof is actuated by a hydraulic assembly or a pneumatic assembly to rotate around the principal shaft 3 such that the vehicle roof is actuated to displace between the closed position and the retracted position. In the closed position, the roof is resting on the vehicle frame, and the vehicle fitted with said roof retracting device acts as a common car. In the retracted position, the roof is lodged in the trunk, and the vehicle fitted with said roof retracting device acts as a sports car. The trunk cover can be opened backwards so that the roof can be lodged in the trunk. The trunk cover can be opened forwards in order to lodge luggage into the trunk.

The rear shelf 2 can be in the opened position and in the closed position. When the rear shelf 2 is in opened position, it makes space for the passage of the roof such that the roof can be displaced smoothly between the closed position and the retracted position. When in the closed position, the rear shelf 2 can conceal the gap between the vehicle roof and the trunk cover for the esthetic and aerodynamic needs.

Generally, the rear shelf 2 operates together with the roof. Concretely, the extension 7 of the guiding means 1 is configured to extend transversely from one end of the guiding means 1 of the roof. And, the extension 7 of the guiding means 1 can be engaged with and disengaged from a radial protrusion of the initiative lever 5 such that the initiative lever 5 is actuated to rotate around the principal shaft 3. The initiative lever 5 is connected to the rear shelf 2 via the L-shaped connecting lever 6. Accordingly, the initiative lever 5 can rotates to open or close the rear shelf 2 via the connecting lever 6.

According to an embodiment of the invention, the initiative lever 5 comprises a cam which is radially configured in the initiative lever 5 (not shown in the drawing). The roof retracting device also comprises a resetting lever 12 which is selectively engagable and disengagable with the cam of the initiative lever 5. The resetting lever 12 comes into contact with the cam of the initiative lever 5 and rotates the initiative lever 5 to close the rear shelf 2 after the roof is retracted into the trunk. The roof retracting device also comprises a resetting spring which is connected to the initiative lever 5. Before the roof comes out of the trunk, the resetting lever 12 is disengaged from the cam and the initiative lever 5 is rotated by said resetting spring to open the said rear shelf 2. Preferably, the resetting lever 12 operates together with the trunk cover. For example, the resetting lever 12 operates together with the trunk cover via a cable. When the trunk cover comes into the closed position, the resetting lever 12 comes into contact with the cam of the initiative lever 5 in order to close said rear shelf 2. When the trunk cover comes into the opened position, the resetting lever 12 is disengaged from the cam to open the rear shelf 2 via the resetting spring.

The operation of the roof retracting device during retraction of the roof takes place in the following manner.

It is necessary to open the trunk cover so that the roof can be retracted into the trunk. When the trunk cover is opened, the resetting lever 12 is rotated in an anticlockwise direction as shown in FIG. 1 by a connecting mechanism such as a cable. Namely, the resetting lever 12 is rotated upwards.

And then the driving mechanism such as a hydraulic assembly and a pneumatic assembly is turned on and actuates the guiding means 1 of the roof to rotate around the principal shaft 3 in order to fold the roof. After the guiding means 1 rotates some angle so that the roof is retracted and close to the trunk or isn't retracted into the trunk, the extension 7 of the guiding means actuates the initiative lever 5 to rotate in the anticlockwise direction. The initiative lever 5 which is rotated actuates the rear shelf 2 to displace from the closed position to the opened position so that the roof can retract smoothly into the trunk.

The roof completely is retracted into the trunk when the guiding means 1 of the roof reaches the terminal point. Then, it is necessary to close the trunk cover. When the trunk cover displaces from the opened position to the closed position, the resetting lever 12 is clockwise rotated by a connecting mechanism such as a cable. The resetting lever 12 which is rotated will come into contact with the cam of the initiative lever 5 and drive the initiative lever 5 to rotate in the anticlockwise direction. The initiative lever 5 which is rotated actuates the rear shelf 2 to be displaced from the opened position to the closed position via the connecting lever 6. When the trunk cover is completely closed, the rear shelf 2 comes into the closed position to conceal a gap in the front of the trunk cover. Then, the retraction of the roof is finished.

Contrarily, the operation of the roof retracting device during unfolding of the roof takes place in the following manner.

It is necessary to open the trunk cover backwards in order to unfold the roof from the trunk. During the opening process of the trunk cover, the resetting lever 12 is actuated by the trunk cover to rotate upwards. Thus, the push of the resetting lever 12 against the initiative lever 5 vanishes and the initiative lever 5 is reset by the resetting spring. Namely, the initiative lever 5 is rotated in the clockwise direction. So the initiative lever 5 actuates the rear shelf 2 to the opened position via the connecting lever 6, thus making space for the passage of the roof.

And then, the guiding means 1 of the roof is actuated to rotate in the clockwise direction by the driving mechanism to move the roof out of the trunk. The extension 7 of the guiding means actuates the initiative lever 5 to rotate in the clockwise direction. The initiative lever 5 moves the rear shelf 2 to the closed position via the connecting lever 6.

And then, the guiding means 1 of the roof continues rotating clockwise to unfold the roof. When the roof is rested on the vehicle frame, the trunk cover is closed. During the closing process of the trunk cover, the resetting lever 12 is rotated to the original position as shown in FIG. 1. Thus, the unfolding of the roof is finished.

In order to achieve further improvement in esthetic and aerodynamics of vehicles, it may be necessary to mount closure flaps on both sides of the rear shelf 2 or trunk cover. When the roof is in the closed position, the flaps are retracted in order to make space for the passage in the joint among the C-pillars and the trunk cover and the sides of the vehicle body. When the roof is in the retracted position, the flaps are opened in order to conceal the gap (namely, the aforesaid joint among the C-pillars and the trunk cover and the sides of the vehicle body) on both sides of the trunk cover. The flaps can be solely actuated by a driving device or operate together with the trunk cover or the rear shelf 2.

The principles of the preferred embodiment described herein are therefore illustrative and not restrictive, the scope of the invention being indicated in the appended claims and all variations which come within the meaning of the claims are intended be embraced therein.

## Claims

1. A vehicle roof retracting device, comprising a guiding means (1) of the roof, a rear shelf (2), a trunk cover, and a principal shaft (3), the guiding means (1) of the roof rotating around the principal shaft (3) in order to actuate the roof to displace between the closed position and the retracted position, the rear shelf (2) being opened to make space for the passage of the roof and closed to conceal a gap between the roof and the trunk cover,
wherein said roof retracting device further comprises:
an initiative lever (5) connected to an extension (7) configured to extend transversely from one end of said guiding means (1) of the roof and actuated by said extension (7) to rotate around said principal shaft (3); and
a connecting lever (6) configured to connect the initiative lever (5) and the rear shelf (2) to displace the rear shelf (2) between the opened position and the closed position,
**characterized in that** said device further comprises a resetting lever (12) selectively engaged with or disengaged from a cam of said initiative lever (5), which comes into contact with the cam of said initiative lever (5) and rotates said initiative lever (5) to close the rear shelf after the roof is retracted into the trunk.

2. The vehicle roof retracting device according to claim1, wherein said extension (7) of the guiding means (1) comes into contact with said initiative lever (5) to open said rear shelf (2), when the guiding means (1) of the roof actuates the roof to displace from the closed position to the retracted position.

3. The vehicle roof retracting device according to any of the preceding claims, wherein said extension (7) of the guiding means (1) comes into contact with said initiative lever (5) to close said rear shelf (2) during the guiding means (1) of the roof actuates the roof to displace from the retracted position to the closed position.

4. The vehicle roof retracting device according to any of the preceding claims, wherein said device further comprises a resetting spring, which is connected to said initiative lever (5), and causes rotation of said initiative lever (5) to open said rear shelf (2) when the roof does not come out of the trunk and said resetting lever (12) is disengaged from said cam.

5. The vehicle roof retracting device according to claim 4, wherein said resetting lever (12) operates together with said trunk cover, said resetting lever (12) comes into contact with said cam of said initiative lever (5) to close said rear shelf (2) when said trunk cover comes into the closed position, said resetting lever (12) is disengaged from said cam to open said rear shelf (2) via said resetting spring when said trunk cover comes into the opened position.

6. A vehicle, wherein said vehicle comprises said roof retracting device according to any one of the aforesaid claims.

## Patentansprüche

1. Vorrichtung zum Einziehen eines Fahrzeugdachs, aufweisend ein Führungsmittel (1) des Dachs, eine Hutablage (2), eine Kofferraumabdeckung und eine Hauptwelle (3), wobei sich das Führungsmittel (1) des Dachs um die Hauptwelle (3) dreht, um das Dach zu betätigen, um es zwischen der geschlossenen Position und der eingezogenen Position zu bewegen, wobei die Hutablage (2) geöffnet wird, um Raum für den Weg des Dachs zu schaffen, und geschlossen wird, um einen Abstand zwischen dem Dach und der Kofferraumabdeckung zu verdecken,
wobei die besagte Vorrichtung zum Einziehen eines Fahrzeugdachs weiterhin aufweist:
einen Auslösehebel (5), der mit einer Verlängerung (7) verbunden ist, die konfiguriert ist, um sich transversal von einem Ende des besagten Führungsmittels (1) des Dachs zu erstrecken, und der von der besagten Verlängerung (7) betätigt wird, um sich um die besagte Hauptwelle (3) zu drehen; und
einen Verbindungshebel (6), der konfiguriert ist, um den Auslösehebel (5) und die Hutablage (2) miteinander zu verbinden, um die Hutablage (2) zwischen der offenen Position und der geschlossenen Position zu bewegen,
**dadurch gekennzeichnet, dass** die besagte Vorrichtung weiterhin einen Rückstellhebel (12) aufweist, der wahlweise mit einem Nocken des besagten Auslösehebels (5) in Eingriff steht oder von diesem gelöst ist und mit dem Nocken des besagten Auslösehebels (5) in Kontakt kommt und den besagten Auslösehebel (5) dreht, um die Hutablage zu schließen, nachdem das Dach in den Kofferraum eingezogen wurde.

2. Vorrichtung zum Einziehen eines Fahrzeugdachs nach Anspruch 1, wobei die besagte Verlängerung (7) des Führungsmittels (1) mit dem besagten Auslösehebel (5) in Kontakt kommt, um die besagte Hutablage (2) zu öffnen, wenn das Führungsmittel (1) des Dachs das Dach betätigt, um es von der geschlossenen Position in die eingezogene Position zu bewegen.

3. Vorrichtung zum Einziehen eines Fahrzeugdachs nach einem der vorhergehenden Ansprüche, wobei die besagte Verlängerung (7) des Führungsmittels (1) in Kontakt mit dem besagten Auslösehebel (5) kommt, um die besagte Hutablage (2) zu schließen, während das Führungsmittel (1) des Dachs das Dach betätigt, um es von der eingezogenen Position in die geschlossene Position zu bewegen.

4. Vorrichtung zum Einziehen eines Fahrzeugdachs nach einem der vorhergehenden Ansprüche, wobei die besagte Vorrichtung weiterhin eine Rückstellfeder aufweist, die mit dem besagten Auslösehebel (5) verbunden ist und eine Drehung des besagten Auslösehebels (5) bewirkt, um die besagte Hutablage (2) zu öffnen, wenn das Dach nicht aus dem Kofferraum ausgezogen ist und der besagte Rückstellhebel (12) vom besagten Nocken gelöst ist.

5. Vorrichtung zum Einziehen eines Fahrzeugdachs nach Anspruch 4, wobei der besagte Rückstellhebel (12) mit der besagten Kofferraumabdeckung zusammenwirkt, wobei der besagte Rückstellhebel (12) mit dem besagten Nocken des besagten Auslösehebels (5) in Kontakt kommt, um die besagte Hutablage (2) zu schließen, wenn die besagte Kofferraumabdeckung in die geschlossene Position gelangt, wobei der besagte Rückstellhebel (12) vom besagten Nocken gelöst wird, um die besagte Hutablage (2) mittels der besagten Rückstellfeder zu öffnen, wenn die besagte Kofferraumabdeckung in die offene Position gelangt.

6. Fahrzeug, wobei das besagte Fahrzeug die besagte Vorrichtung zum Einziehen eines Fahrzeugdachs nach einem der vorhergehenden Ansprüche aufweist.

## Revendications

1. Dispositif de rétraction de toit de véhicule, comprenant un moyen de guidage (1) du toit, une plage arrière (2), un couvercle de coffre, et un arbre principal (3), le moyen de guidage (1) du toit tournant autour de l'arbre principal (3) afin d'actionner le toit pour le déplacer entre la position fermée et la position rétractée, la plage arrière (2) étant ouverte pour créer un espace pour le passage du toit et étant fermée pour dissimuler un espace entre le toit et le couvercle de coffre,
ledit dispositif de rétraction de toit de véhicule comprenant en outre :
un levier de déclenchement (5) relié à une extension (7) qui est configurée pour s'étendre transversalement à partir d'une extrémité dudit moyen de guidage (1) du toit, et qui est actionné par ladite extension (7) pour tourner autour de l'arbre principal (3) ; et
un levier de liaison (6) qui est configuré pour relier le levier de déclenchement (5) et la plage arrière (2) pour déplacer la plage arrière (2) entre la position ouverte et la position fermée,
**caractérisé en ce que** ledit dispositif comprend en outre un levier de rappel (12) qui est sélectivement en prise avec une came dudit levier de déclenchement (5) ou dégagé de celle-ci, et entre en contact avec la came dudit levier de déclenchement (5) et tourne ledit levier de déclenchement (5) pour fermer la plage arrière après que le toit ait été rétracté dans le coffre.

2. Dispositif de rétraction de toit de véhicule selon la revendication 1, dans lequel ladite extension (7) du moyen de guidage (1) entre en contact avec ledit levier de déclenchement (5) pour ouvrir ladite plage arrière (2) lorsque le moyen de guidage (1) du toit actionne le toit de manière à le faire passer de la position fermée à la position rétractée.

3. Dispositif de rétraction de toit de véhicule selon l'une des revendications précédentes, dans lequel ladite extension (7) du moyen de guidage (1) entre en contact avec ledit levier de déclenchement (5) pour fermer ladite plage arrière (2) tandis que le moyen de guidage (1) du toit actionne le toit de manière à le faire passer de la position rétractée à la position fermée.

4. Dispositif de rétraction de toit de véhicule selon l'une des revendications précédentes, dans lequel ledit dispositif comprend en outre un ressort de rappel qui est relié audit levier de déclenchement (5) et provoque une rotation dudit levier de déclenchement (5) de manière à ouvrir ladite plage arrière (2) lorsque le toit ne sort pas du coffre et ledit levier de rappel (12) est dégagé de ladite came.

5. Dispositif de rétraction de toit de véhicule selon la revendication 4, dans lequel ledit levier de rappel (12) coopère avec ledit couvercle de coffre, ledit levier de rappel (12) entrant en contact avec ladite came dudit levier de déclenchement (5) pour fermer ladite plage arrière (2) lorsque ledit couvercle de coffre atteint la position fermée, ledit levier de rappel (12) étant dégagé de ladite came pour ouvrir ladite plage arrière (2) au moyen dudit ressort de rappel lorsque ledit couvercle de coffre atteint la position ouverte.

6. Véhicule, ledit véhicule comprenant ledit dispositif de rétraction de toit selon l'une des revendications précédentes.
